(19) Europäisches Patentamt
European Patent Office
Office européen des brevets

(11) EP 4 628 540 A1

(12) **EUROPEAN PATENT APPLICATION**
published in accordance with Art. 153(4) EPC

(43) Date of publication:
**08.10.2025 Bulletin 2025/41**

(21) Application number: **23897805.0**

(22) Date of filing: **29.11.2023**

(51) International Patent Classification (IPC):
***C08L 69/00*** *(2006.01)* ***C08K 5/42*** *(2006.01)*

(52) Cooperative Patent Classification (CPC):
**C08K 5/42; C08L 69/00**

(86) International application number:
**PCT/JP2023/042676**

(87) International publication number:
**WO 2024/117158 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190766**

(71) Applicant: **Mitsubishi Chemical Corporation**
**Tokyo 100-8251 (JP)**

(72) Inventor: **IRIE, Yasuyuki**
**Tokyo 100-8251 (JP)**

(74) Representative: **Vossius & Partner**
**Patentanwälte Rechtsanwälte mbB**
**Siebertstrasse 3**
**81675 München (DE)**

(54) **RESIN COMPOSITION, PELLETS AND MOLDED ARTICLE**

(57) A resin composition comprises a polycarbonate resin and a flame retardant, wherein the polycarbonate resin comprises a polycarbonate resin containing a constituent unit represented by the following formula (1) and a recycled polycarbonate resin, wherein the recycled polycarbonate resin contains a constituent unit represented by the following formula (2), and wherein a content of the flame retardant is less than 25 parts by mass with respect to 100 parts by mass of the polycarbonate resin:
wherein $R^1$ is a methyl group. To provide a pellet and a formed article of the resin composition.

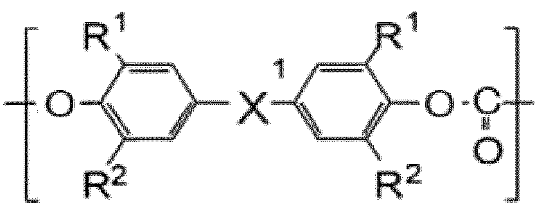

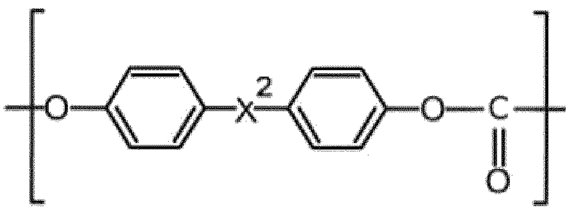

EP 4 628 540 A1

## Description

3Technical Field

The present invention relates to a resin composition, a pellet, and a formed article. In particular, the present invention relates to a resin composition having a polycarbonate resin as a major component.

Background Art

Polycarbonate resins are excellent in mechanical strength, electrical characteristics, transparency, and other properties, and are widely used as engineering plastics in various fields, such as the electrical and electronic equipment field and the automotive field. Polycarbonate resin materials may be required to have flame retardancy depending on the application. Polycarbonate resin materials may also be required to have high hardness of the resulting formed article, depending on the application.

Here, a resin composition having excellent flame retardancy and high surface hardness is described in Patent Literature 1. Specifically, Patent Literature 1 discloses an aromatic polycarbonate resin composition having as its main resin materials an aromatic polycarbonate resin with a weight average molecular weight of 37000 to 55000 in terms of polystyrene, which accounts for 85 to 95% by mass of the main resin materials, and a rubber component-free polystyrene-based resin, which accounts for 15 to 5% by mass of the main resin materials, and containing as additives a polyfluoroolefin resin, an organosulfonate-based flame retardant, and a silicon-based flame retardant.

Citation List

Patent Literature

Patent Literature 1: Japanese Patent Laid-Open No. 2010-202746

Summary of the Invention

Technical Problem

Here, as the application of polycarbonate resins has diversified, there is a need for a new polycarbonate resin composition with excellent flame retardancy.

In particular, there is a need for a resin composition that is excellent in flame retardancy and is also capable of providing formed articles of polycarbonate resin with high surface hardness, or a resin composition that is excellent in flame retardancy and is also capable of providing formed articles of polycarbonate resin with excellent transparency, for example.

An object of the present invention is to solve such a problem, and an object thereof is to provide a new resin composition containing a polycarbonate resin with excellent flame retardancy, as well as a pellet and a formed article of the resin composition.

In particular, an object of the present invention is to provide a resin composition that is excellent in flame retardancy and is also capable of providing formed articles of polycarbonate resin with high surface hardness, or a resin composition that is excellent in flame retardancy and is also capable of providing formed articles of polycarbonate resin with excellent transparency.

Solution to Problem

The present inventors conducted research to address the above-mentioned problems, and as a result, discovered that the problems described above could be solved by using both a predetermined polycarbonate resin such as a bisphenol C type polycarbonate resin and a recycled polycarbonate resin as a polycarbonate resin in a resin composition comprising a polycarbonate resin and a flame retardant.

Specifically, the problems described above are solved by the following means.

<1> A resin composition,

wherein the resin composition comprises a polycarbonate resin and a flame retardant,
wherein the polycarbonate resin comprises a polycarbonate resin containing a constituent unit represented by the following formula (1) and a recycled polycarbonate resin,

wherein the recycled polycarbonate resin contains a constituent unit represented by the following formula (2), and wherein a content of the flame retardant is less than 25 parts by mass with respect to 100 parts by mass of the polycarbonate resin:

Formula (1)

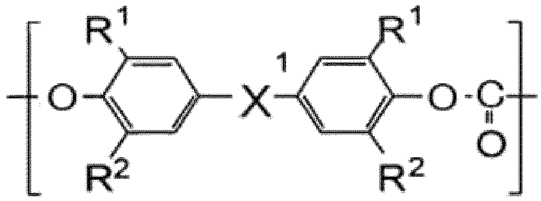

wherein $R^1$ represents a methyl group, $R^2$ represents a hydrogen atom or a methyl group, and $X^1$ represents any of the following formulae:

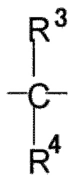
,
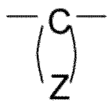

wherein $R^3$ and $R^4$ each independently represent a hydrogen atom or a methyl group, and Z represents a group that is bonded to C to form an alicyclic hydrocarbon having 6 to 12 carbon atoms and optionally having a substituent,

Formula (2)

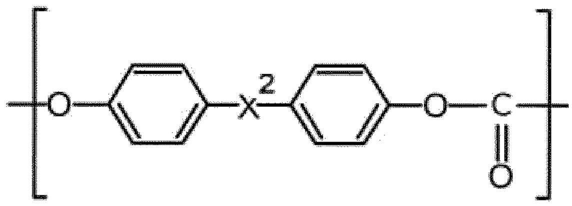

wherein $X^2$ represents any of the following formulae:

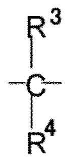
,
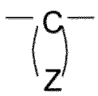

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<2> The resin composition according to <1>, wherein the flame retardant comprises a metal salt-based flame retardant.
<3> The resin composition according to <1>, wherein the flame retardant comprises an alkali metal salt of sulfonic acid.
<4> The resin composition according to any one of <1> to <3>, wherein the polycarbonate resin containing a constituent unit represented by the formula (1) contains the unit represented by the formula (1) in a proportion of 50% by mol or more of entire constituent units.
<5> The resin composition according to any one of <1> to <4>, wherein a content of a fluoropolymer having fibril forming ability in the resin composition is 0 parts by mass or more and less than 0.01 parts by mass with respect to 100

parts by mass of the polycarbonate resin.
<6> The resin composition according to any one of <1> to <5>,

wherein the flame retardant comprises an alkali metal salt of sulfonic acid, and
wherein the polycarbonate resin containing a constituent unit represented by the formula (1) contains the unit represented by the formula (1) in a proportion of 50% by mol or more of entire constituent units:

Formula (2)

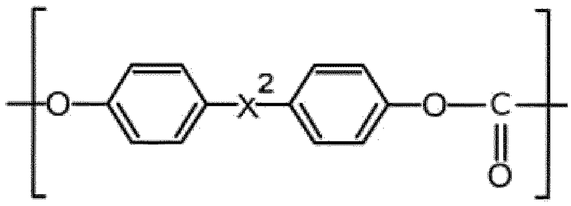

wherein $X^2$ represents any of the following formulae:

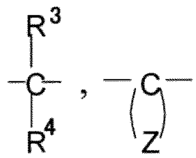

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<7> The resin composition according to any one of <1> to <6>,

wherein a content of the polycarbonate resin is 10 to 95% by mass in the resin composition, and
wherein a content of the flame retardant is 0.005 parts by mass or more with respect to 100 parts by mass of the polycarbonate resin.

<8> The resin composition according to any one of <1> to <7>, wherein a viscosity average molecular weight of the recycled polycarbonate resin is lower than a viscosity average molecular weight of the polycarbonate resin containing a constituent unit represented by the formula (1).
<9> The resin composition according to any one of <1> to <8>,

wherein the flame retardant comprises an alkali metal salt of sulfonic acid,
wherein the polycarbonate resin containing a constituent unit represented by the formula (1) contains the unit represented by the formula (1) in a proportion of 50% by mol or more of entire constituent units,
wherein a content of the polycarbonate resin is 10 to 95% by mass in the resin composition,
wherein a content of the flame retardant is 0.005 parts by mass or more with respect to 100 parts by mass of the polycarbonate resin, and
wherein a viscosity average molecular weight of the recycled polycarbonate resin is lower than a viscosity average molecular weight of the polycarbonate resin containing a constituent unit represented by the formula (1):

Formula (2)

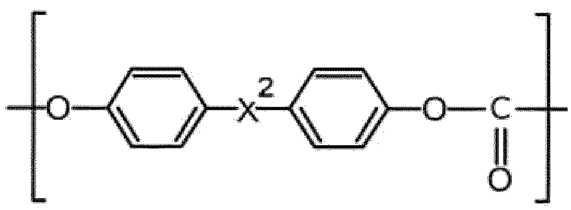

wherein $X^2$ represents any of the following formulae:

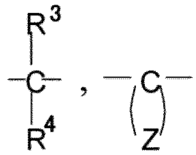

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<10> A pellet of the resin composition according to any one of <1> to <9>.
<11> A formed article formed from the resin composition according to any one of <1> to <9>.
<12> A formed article formed from the pellet according to <10>.

Advantageous Effects of the Invention

The present invention has made it possible to provide a new resin composition containing a polycarbonate resin with excellent flame retardancy, as well as a pellet and a formed article of the resin composition.

In particular, it has been made possible to provide a resin composition that is excellent in flame retardancy and is also capable of providing formed articles of polycarbonate resin with high surface hardness, or a resin composition that is excellent in flame retardancy and is also capable of providing formed articles of polycarbonate resin with excellent transparency.

Detailed Description of the Invention

From now on, a form for performing the present invention (hereinafter, simply referred to as "the present embodiment") will be described in detail. Note that the present embodiment below is merely an illustration for describing the present invention, and the present invention is not limited to the present embodiment.

Note that, as used herein, the expression "A to B" is used in the sense that the numerical values listed before and after "to" are included as the lower limit value and the upper limit value, respectively.

As used herein, various physical property values and characteristic values are those at 23°C, unless otherwise stated.

If the measurement methods or other details described in the standards presented herein differ from year to year, they are based on the standards as of January 1, 2022, unless otherwise stated.

A resin composition of the present embodiment is characterized by that the resin composition contains a polycarbonate resin and a flame retardant, that the polycarbonate resin includes a polycarbonate resin containing a constituent unit represented by the following formula (1) and a recycled polycarbonate resin, that the recycled polycarbonate resin contains a constituent unit represented by the following formula (2), and that the content of the flame retardant is less than 25 parts by mass with respect to 100 parts by mass of the polycarbonate resin:

Formula (1)

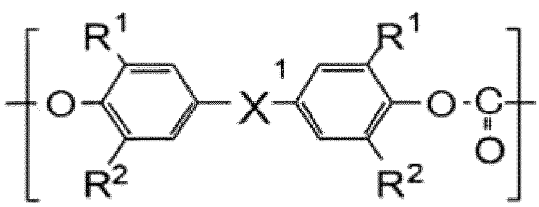

wherein $R^1$ represents a methyl group, $R^2$ represents a hydrogen atom or a methyl group, and $X^1$ represents any of the following formulae:

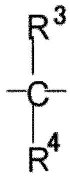 , 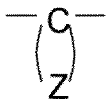

wherein $R^3$ and $R^4$ each independently represent a hydrogen atom or a methyl group, and Z represents a group that is bonded to C to form an alicyclic hydrocarbon having 6 to 12 carbon atoms and optionally having a substituent,

Formula (2)

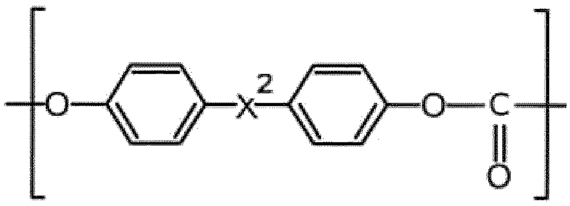

wherein $X^2$ represents any of the following formulae:

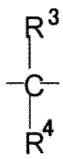 , 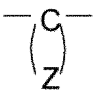

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

With such a configuration, a resin composition with excellent flame retardancy can be provided. In particular, excellent flame retardancy can be achieved even when no fluoropolymer having fibril forming ability, which is known as an anti-dripping agent, is blended in.

When a heat source is applied to a formed article of polycarbonate resin, the heat source causes the polycarbonate resin to be thermally decomposed, generating gas. When gas is generated, it advances combustion as a combustible gas, and heat is transferred to the formed article, further advancing the combustion. Accordingly, when attempting to make a formed article of polycarbonate resin have flame retardancy, it is only necessary to stop somewhere in the aforementioned cycle. It is assumed that the present embodiment was able to stop the transfer of heat by promoting the formation of a carbonized layer in the formed article during the combustion process.

More specifically, during the combustion process of polycarbonate resin, the polycarbonate resin repeatedly undergoes various multistage reactions, including isomerization, eventually forming a carbonized layer, which can stop the aforementioned combustion cycle. Here, it seems that the recycled polycarbonate resin has already undergone isomerization, and thus the reaction time to form the carbonized layer could have been shortened compared to the case of virgin polycarbonate resin.

The polycarbonate resin containing a constituent unit represented by the formula (1) is also assumed to easily form a carbonized layer, and is thus assumed to have contributed to the faster formation of a carbonized layer through a synergistic effect.

In addition, the use of the polycarbonate resin containing a constituent unit represented by the formula (1) as the polycarbonate resin tends to improve the transparency of the resulting formed article. However, when an anti-dripping agent such as a fluoropolymer having fibril forming ability is blended in the polycarbonate resin, the transparency becomes inferior. In the present embodiment, excellent flame retardancy can be achieved even when no fluoropolymer having fibril forming ability is blended in, thus making the resin composition excellent in transparency.

Also, in the present embodiment, the use of the polycarbonate resin containing a constituent unit represented by the formula (1) can enhance the surface hardness of the resulting formed article.

<Polycarbonate Resin>

The resin composition of the present embodiment contains a polycarbonate resin containing a constituent unit

represented by the following formula (1) and a recycled polycarbonate resin. By containing the polycarbonate resin containing a constituent unit represented by the formula (1), the flame retardancy of the resin composition can be enhanced, and the transparency and surface hardness of the resulting formed article can also be enhanced. Also, the use of the recycled polycarbonate resin can enhance the flame retardancy of the resin composition.

<<Polycarbonate Resin Containing Constituent Unit Represented by Formula (1)>>

The resin composition of the present embodiment contains a polycarbonate resin containing a constituent unit represented by the formula (1). By containing the constituent unit represented by the formula (1), formed articles that are excellent in transparency and hardness can be obtained. Note that the polycarbonate resin containing a constituent unit represented by the formula (1) is normally a virgin polycarbonate resin:

Formula (1)

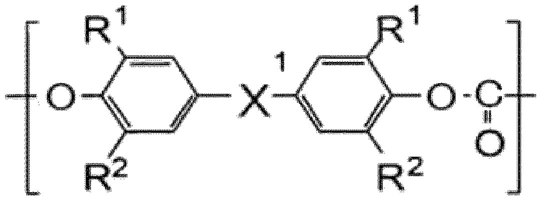

wherein $R^1$ represents a methyl group, $R^2$ represents a hydrogen atom or a methyl group, and $X^1$ represents any of the following formulae:

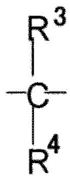 , 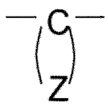

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

In the constituent unit represented by the formula (1), it is preferable that $R^2$ is a hydrogen atom.

In the formula (1), when $X^1$ is

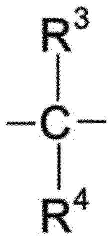

, it is preferable that at least one of $R^3$ and $R^4$ is a methyl group, and it is more preferable that both of them are methyl groups.

Also, when $X^1$ is

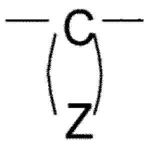

, Z is bonded to carbon C, which is bonded to the two phenyl groups in the above formula (1), to form a divalent alicyclic

hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Examples of the alicyclic hydrocarbon having a substituent formed by Z bonded to C include methyl-substituted products and ethyl-substituted products of the alicyclic hydrocarbon groups described above. Examples of the substituted one include those having these methyl substituent and ethyl substituent. Among these, a cyclohexylidene group, a methyl-substituted product of a cyclohexylidene group (preferably 3,3,5-trimethyl-substituted product), and a cyclododecylidene group are preferable.

In the formula (1), $X^1$ is preferably the following structure.

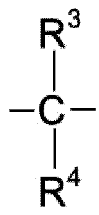

A preferable specific example of the constituent unit represented by the above formula (1) is 2,2-bis(3-methyl-4-hydroxyphenyl) propane, that is, a constituent unit composed of bisphenol C (carbonate constituent unit).

In the present embodiment, the polycarbonate resin may contain only one type of constituent unit represented by the formula (1), or may contain two or more types thereof.

In the resin composition of the present embodiment, the virgin polycarbonate resin containing a constituent unit represented by the formula (1) preferably contains the unit represented by the formula (1) in a proportion of 50% by mol or more of the entire constituent units, and furthermore, more preferably 60% by mol or more, and still more preferably 70% by mol or more. Depending on the application or other factors, the above proportion may be 80% by mol or more, 90% by mol or more, or 95% by mol or more. In the virgin polycarbonate resin containing a constituent unit represented by the formula (1), the upper limit of the proportion of the unit represented by the formula (1) in the entire constituent units is preferably 100% by mol or less.

The resin composition of the present embodiment may also contain, as the virgin polycarbonate resin, a polycarbonate resin containing a constituent unit represented by the formula (2): Formula (2)

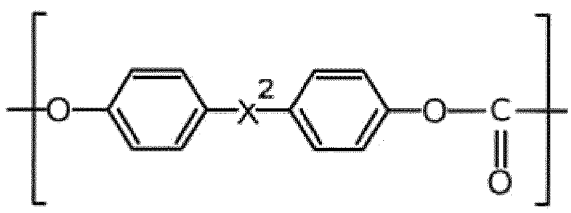

wherein $X^2$ represents any of the following formulae:

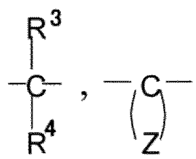

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

The details of the constituent unit represented by the formula (2) have the same meaning as the constituent unit represented by the formula (2) that may be contained in the recycled polycarbonate resin as described below, and the preferable range is also the same.

The resin composition of the present embodiment may contain, as the above virgin polycarbonate resin, a polycarbonate resin containing a constituent unit represented by the formula (2) aside from a polycarbonate resin containing a constituent unit represented by the formula (1), or may contain a polycarbonate resin containing a constituent unit represented by the formula (1) and a constituent unit represented by the formula (2).

In 100% by mass of the total of the polycarbonate resins (virgin polycarbonate resin and recycled polycarbonate

resin) contained in the resin composition of the present embodiment, the proportion of the constituent unit represented by the formula (1) is preferably 5% by mass or more, more preferably 10% by mass or more, and still more preferably 15% by mass or more, and it is also preferably 100% by mass or less, and more preferably 95% by mass or less.

More specifically, the following forms are preferable for the virgin polycarbonate resin used in the present embodiment:

(A1) a polycarbonate resin containing the constituent unit represented by the formula (1);
(A2) a blended product of a polycarbonate resin containing the constituent unit represented by the formula (1) and a polycarbonate resin containing the constituent unit represented by the formula (2);
(A3) a polycarbonate resin containing the constituent unit represented by the formula (1) and the constituent unit represented by the formula (2);
(A4) a blended product of a polycarbonate resin containing the constituent unit represented by the formula (1) and a polycarbonate resin containing the constituent unit represented by the formula (1) and the constituent unit represented by the formula (2);
(A5) a blended product of a polycarbonate resin containing the constituent unit represented by the formula (2) and a polycarbonate resin containing the constituent unit represented by the formula (1) and the constituent unit represented by the formula (2);
(A6) a blended product of a polycarbonate resin containing the constituent unit represented by the formula (1), a polycarbonate resin containing the constituent unit represented by the formula (2), and a polycarbonate resin containing the constituent unit represented by the formula (1) and the constituent unit represented by the formula (2);
(A7) a polycarbonate resin of the (A1) to (A6) described above in which the polycarbonate resin or the polycarbonate resins constituting the blended product thereof contain other constituent units other than the constituent unit represented by the formula (1) and the constituent unit represented by the formula (2); and
(A8) a blended product of the polycarbonate resin or blended product of the (A1) to (A7) described above and a polycarbonate resin composed of other constituent units.

As for the viscosity average molecular weight (Mv) of the virgin polycarbonate resin used in the present embodiment, the lower limit value is preferably 8,000 or more, more preferably 10,000 or more, still more preferably 15,000 or more, and even more preferably 18,000 or more. Also, the upper limit value of Mv is preferably 100,000 or less, and more preferably 80,000 or less.

By setting the viscosity average molecular weight to the lower limit value described above or more, formability is improved and formed articles with high mechanical strength can be obtained as well. In addition, by setting the viscosity average molecular weight to the upper limit value described above or less, the flowability of the resin composition is improved, and thin-walled formed articles and the like can be efficiently produced as well.

When the resin composition contains two or more types of polycarbonate resins, the viscosity average molecular weight shall be the total of the values obtained by multiplying the viscosity average molecular weight of each polycarbonate resin by its mass fraction (the same applies to the recycled polycarbonate resin).

In particular, the viscosity average molecular weight of the polycarbonate resin containing a constituent unit represented by the formula (1) is preferably 15,000 or more, and more preferably 18,000 or more, and it is also preferably 30,000 or less, and more preferably 28,000 or less. On the other hand, the viscosity average molecular weight of the polycarbonate resin containing a constituent unit represented by the formula (2) is preferably 20,000 or more, and more preferably 25,000 or more, and it is also preferably 100,000 or less, and more preferably 80,000 or less.

The viscosity average molecular weight (Mv) of the polycarbonate resin is calculated by using methylene chloride as the solvent, determining the intrinsic viscosity (η) (unit: dL/g) at a temperature of 20°C using an Ubbelohde viscometer, and using the following the Schnell's viscosity equation.

$$\eta = 1.23 \times 10^{-4} Mv^{0.83}$$

The proportion of the virgin polycarbonate resin in the resin composition of the present embodiment is preferably 10% by mass or more, more preferably 20% by mass or more, still more preferably 30% by mass or more, even more preferably 40% by mass or more, and even further preferably 45% by mass or more in the resin composition. Also, the proportion of the virgin polycarbonate resin in the resin composition is preferably 95% by mass or less, more preferably 90% by mass or less, and still more preferably 85% by mass or less in the resin composition.

The resin composition may contain only one type of virgin polycarbonate resin, or may contain two or more types thereof. When two or more types are contained, it is preferable that the total amount is in the range described above.

<<Recycled Polycarbonate Resin>>

The resin composition of the present embodiment contains a recycled polycarbonate resin containing a constituent unit represented by the formula (2). Recycled polycarbonate resin means virgin polycarbonate resin that has undergone some kind of forming process, and is intended to include not only recovered products but also rejected polycarbonate resin formed articles, end materials from the production of polycarbonate resin formed articles, and the like. Forming processed articles are intended to include injection molded articles, extrusion molded articles, and formed articles formed by other production methods.

Examples of the recycled polycarbonate resin also include those obtained by material recycling, which involves crushing and alkali cleaning recovered used polycarbonate resin formed articles for reuse in fibers, etc., those obtained by chemical recycling (chemical decomposition method), and those obtained by mechanical recycling.

Chemical recycling is the resynthesis of polycarbonate resin by chemical decomposition of recovered used polycarbonate resin formed articles back to the starting material level. Meanwhile, mechanical recycling is an approach that makes it possible to remove contaminants from polycarbonate resin formed articles more reliably than material recycling by performing alkali cleaning in the above-described material recycling more rigorously, or by performing vacuum drying at high temperature, for example.

For example, foreign matter is removed from used polycarbonate resin formed articles, which are then crushed and cleaned, and subsequently pelletized with an extruder to obtain recycled polycarbonate resin.

Examples of the used polycarbonate resin formed articles include discs, sheets (including films), meter covers, headlamp lenses, and water bottles, with discs or headlamp lenses being preferable.

Also, the recycled polycarbonate resin is not particularly limited as long as it contains a -[O-R-OC(=O)]- unit including a carbonate ester bond in the molecular main chain (R is an organic group, preferably a hydrocarbon group, and more preferably an aliphatic group, an aromatic group, or one including both aliphatic and aromatic groups, and also has a linear or branched structure). In the present embodiment, the recycled polycarbonate resin is preferably an aromatic polycarbonate resin, more preferably a polycarbonate resin having a bisphenol backbone, and still more preferably a bisphenol A type polycarbonate resin. By using such a recycled polycarbonate resin, more excellent heat resistance and toughness can be achieved.

In the present embodiment, the recycled polycarbonate resin includes a recycled polycarbonate resin containing a constituent unit represented by the formula (2). It is preferably a polycarbonate resin containing a constituent unit represented by the formula (2) in a proportion of 90% by mol or more of the entire constituent units, and it is still more preferably a polycarbonate resin containing a constituent unit represented by the formula (2) in a proportion of 95% by mol or more of the entire constituent units:

Formula (2)

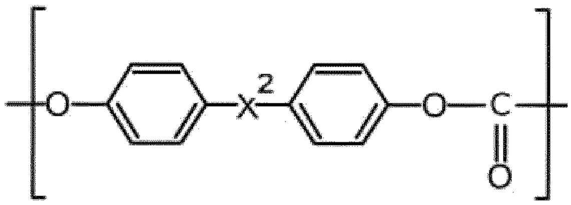

wherein $X^2$ represents any of the following formulae:

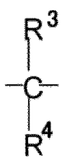 , 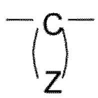

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

In the formula (2), when $X^2$ is

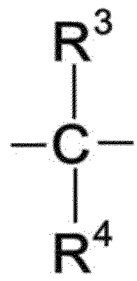

, it is preferable that at least one of $R^3$ and $R^4$ is a methyl group, and it is more preferable that both of them are methyl groups.

Also, when $X^2$ is

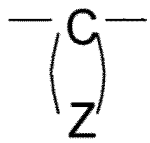

, Z is bonded to carbon C, which is bonded to the two phenyl groups in the above formula (2), to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Examples of the substituted one include those having these methyl substituent and ethyl substituent. Among these, a cyclohexylidene group, a methyl-substituted product of a cyclohexylidene group (preferably 3,3,5-trimethyl-substituted product), and a cyclododecylidene group are preferable.

In the formula (2), $X^2$ is preferably the following structure.

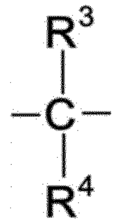

In the present embodiment, the recycled polycarbonate resin containing a constituent unit represented by the formula (2) may contain only one type of constituent unit represented by the formula (2), or may contain two or more types thereof.

In the resin composition of the present embodiment, the recycled polycarbonate resin containing a constituent unit represented by the formula (2) preferably contains the unit represented by the formula (2) in a proportion of 50% by mol or more of the entire constituent units, and furthermore, more preferably 60% by mol or more, and still more preferably 70% by mol or more. Depending on the application or other factors, the above proportion may be 80% by mol or more, 90% by mol or more, or 95% by mol or more, and it is also preferably 100% by mol or less.

In the present embodiment, the recycled polycarbonate resin containing a constituent unit represented by the formula (2) may contain other constituent units other than the constituent unit represented by the formula (2). Examples of the other constituent units include, in addition to the constituent unit represented by the formula (2) described above, constituent units derived from the dihydroxy compounds shown below.

Bis(4-hydroxyphenyl)methane, 2,2-bis(4-hydroxyphenyl) butane, 2,2-bis(4-hydroxyphenyl)pentane, 2,2-bis(4-hydroxyphenyl)-4-methylpentane, 2,2-bis(4-hydroxy-3-methylphenyl)propane, 2,2-bis(4-hydroxy-3,5-dimethylphenyl) propane, 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane, 1,1-bis(4-hydroxyphenyl)-1-phenylethane, 1,1-bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropylidene)bisphenol, 4,4'-(1,4-phenylenediisopropylidene)bisphenol, 9,9-bis(4-hydroxyphenyl)fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3,5-trimethylcyclohexane, and 1,1-bis(4-hydroxy-6-methyl-3-tert-butylphenyl)butane.

Also, as one embodiment of the other constituent units, the constituent unit represented by the formula (2) described in paragraph 0008 of International Publication No. WO 2017/099226, the description in paragraphs 0043 to 0052 of International Publication No. WO 2017/099226, and the description in Japanese Patent Laid-Open No. 2011-046769 can be referred to, the contents of which are incorporated herein.

Also, the resin composition of the present embodiment may contain, as the recycled polycarbonate resin, a recycled product of the above-described polycarbonate resin containing a constituent unit represented by the formula (1).

In the resin composition of the present embodiment, the proportion of the recycled polycarbonate resin containing a constituent unit represented by the formula (2) is preferably 90% by mass or more, and more preferably 95% by mass, and it is also preferably 100% by mass or less in 100% by mass of recycled polycarbonate resins.

As for the viscosity average molecular weight (Mv) of the recycled polycarbonate resin used in the present embodiment, the lower limit value is preferably 5,000 or more, more preferably 8,000 or more, still more preferably 10,000 or more, and even more preferably 12,000 or more. Also, the upper limit value of Mv is preferably 30,000 or less, more preferably 28,000 or less, still more preferably 25,000 or less, and even more preferably 23,000 or less.

By setting the viscosity average molecular weight to the lower limit value described above or more, formability is improved and formed articles with high mechanical strength can be obtained as well. In addition, by setting the viscosity average molecular weight to the upper limit value described above or less, the flowability of the resin composition is improved, and thin-walled formed articles and the like can be efficiently produced as well.

It is preferable that the viscosity average molecular weight of the recycled polycarbonate resin is smaller than the viscosity average molecular weight of the polycarbonate resin containing a constituent unit represented by the formula (1). More specifically, the difference between the viscosity average molecular weight of the recycled polycarbonate resin and the viscosity average molecular weight of the polycarbonate resin containing a constituent unit represented by the formula (1) is preferably 1000 or more, more preferably 2000 or more, more preferably 3000 or more, and still more preferably 4000 or more, and it may be 5000 or more. Also, the above difference is preferably 15,000 or less, and more preferably 10,000 or less.

The proportion of the recycled polycarbonate resin in the resin composition of the present embodiment is preferably 5% by mass or more, more preferably 10% by mass or more, and still more preferably 15% by mass or more, and it is also preferably 90% by mass or less, more preferably 80% by mass or less, still more preferably 70% by mass or less, even more preferably 60% by mass or less, and even further preferably 55% by mass or less in the resin composition.

The resin composition of the present embodiment may contain only one type of recycled polycarbonate resin, or may contain two or more types thereof. When two or more types are contained, it is preferable that the total amount is in the range described above.

The total amount of the constituent unit represented by the formula (1) and the constituent unit represented by the formula (2) described above preferably accounts for 90% by mass or more, more preferably accounts for 95% by mass or more, and still more preferably accounts for 99% by mass or more with respect to 100% by mass of the polycarbonate resins (virgin polycarbonate resin and recycled polycarbonate resin) used in the present embodiment. The upper limit of the total described above is 100% by mass or less.

The total amount of the polycarbonate resins (virgin polycarbonate resin and recycled polycarbonate resin) in the resin composition of the present embodiment is preferably 95% by mass or more, and more preferably 97% by mass or more, and it may be 99% by mass or more.

<Flame Retardant>

The resin composition of the present embodiment may contain a flame retardant.

By containing a flame retardant, the flame retardancy of the resulting formed article can be further improved.

The flame retardant preferably includes at least one selected from the group consisting of a halogen-based flame retardant, a condensed phosphate ester compound, a phosphazene compound, a metal salt-based flame retardant, and a silicone-based flame retardant, and more preferably includes a metal salt-based flame retardant.

As the metal salt-based flame retardant, an alkali metal salt is preferable. By containing an alkali metal salt (alkali metal salt-based flame retardant), formed articles that are excellent in flame retardancy can be obtained. The alkali metal salt is normally an alkali metal salt of an organic acid.

Examples of the alkali metal salt include an alkali metal salt of sulfonic acid, an alkali metal salt of carboxylic acid, an alkali metal salt of boric acid, and an alkali metal salt of phosphoric acid, but in terms of thermal stability, an alkali metal

salt of sulfonic acid is preferable.

Examples of the metal constituting the alkali metal salt include lithium (Li), sodium (Na), potassium (K), rubidium (Rb), and cesium (Cs), among which sodium, potassium, and cesium are preferable, with sodium and potassium being more preferable, and potassium being still more preferable.

Preferable examples of the alkali metal salt of sulfonic acid include an alkali metal salt of a fluorine-containing aliphatic sulfonic acid or an aromatic sulfonic acid. Among the above, specific preferable examples thereof include an alkali metal salt of a fluorine-containing aliphatic sulfonic acid having at least one C-F bond in the molecule (preferably having a fluoroalkyl group in the molecule), such as potassium nonafluorobutanesulfonate, lithium nonafluorobutanesulfonate, sodium nonafluorobutanesulfonate, cesium nonafluorobutanesulfonate, potassium trifluoromethanesulfonate, lithium trifluoromethanesulfonate, sodium trifluoromethanesulfonate, and cesium trifluoromethanesulfonate; and an alkali metal salt of an aromatic sulfonic acid having at least one aromatic group in the molecule (preferably having two aromatic groups in the molecule), such as dipotassium diphenylsulfonedisulfonate, potassium diphenylsulfonesulfonate, sodium benzenesulfonate, sodium (poly)styrenesulfonate, sodium p-toluenesulfonate, sodium (branched) dodecylbenzenesulfonate, sodium trichlorobenzenesulfonate, potassium benzenesulfonate, potassium styrenesulfonate, potassium (poly)styrenesulfonate, potassium p-toluenesulfonate, potassium (branched) dodecylbenzenesulfonate, potassium trichlorobenzenesulfonate, cesium benzenesulfonate, cesium (poly)styrenesulfonate, cesium p-toluenesulfonate, cesium (branched) dodecylbenzenesulfonate, and cesium trichlorobenzenesulfonate.

For other alkali metal salts, the description in paragraphs 0069 to 0078 of Japanese Patent Laid-Open No. 2015-117298 can be referred to, the contents of which are incorporated herein.

The content of the flame retardant in the resin composition of the present embodiment is preferably 0.005 parts by mass or more, more preferably 0.008 parts by mass or more, still more preferably 0.01 parts by mass or more, even more preferably 0.03 parts by mass or more, and even further preferably 0.05 parts by mass or more with respect to 100 parts by mass of the polycarbonate resins (the total of the virgin polycarbonate resin and the recycled polycarbonate resin). By setting the content to the lower limit value described above or more, the formation of a carbonized layer during the combustion of polycarbonate resin can be promoted and the flame retardancy can be further enhanced. Also, the content of the flame retardant is less than 25 parts by mass, preferably 20 parts by mass or less, more preferably 10 parts by mass or less, still more preferably 4 parts by mass or less, even more preferably 3 parts by mass or less, even further preferably 2 parts by mass or less, and yet further preferably 1.5 parts by mass or less with respect to 100 parts by mass of the polycarbonate resin. By setting the content to the upper limit value described above or less, although the content of the flame retardant is reduced, the flame retardant effect tends to be more effectively demonstrated.

The resin composition of the present embodiment may contain only one type of flame retardant, or may contain two or more types thereof. When two or more types are contained, it is preferable that the total amount is in the range described above.

In particular, the content of the alkali metal salt in the resin composition of the present embodiment is preferably 0.005 parts by mass or more, more preferably 0.008 parts by mass or more, still more preferably 0.01 parts by mass or more, even more preferably 0.03 parts by mass or more, and even further preferably 0.05 parts by mass or more with respect to 100 parts by mass of the polycarbonate resins (the total of the virgin polycarbonate resin and the recycled polycarbonate resin). By setting the content to the lower limit value described above or more, the formation of a carbonized layer during the combustion of polycarbonate resin can be promoted and the flame retardancy can be further enhanced. Also, the content of the alkali metal salt is preferably 1 part by mass or less, more preferably 0.8 parts by mass or less, still more preferably 0.5 parts by mass or less, even more preferably 0.3 parts by mass or less, even further preferably 0.2 parts by mass or less, and yet further preferably 0.15 parts by mass or less with respect to 100 parts by mass of the polycarbonate resin. By setting the content to the upper limit value described above or less, although the content of the flame retardant is reduced, the flame retardant effect tends to be more effectively demonstrated.

The resin composition of the present embodiment may contain only one type of alkali metal salt, or may contain two or more types thereof. When two or more types are contained, it is preferable that the total amount is in the range described above.

One example of the resin composition of the present embodiment is substantially free from flame retardants other than the alkali metal salt. The expression "substantially free from" means that the content of flame retardants other than the alkali metal salt among the flame retardants contained in the resin composition is 10% by mass or less, preferably 5% by mass or less, more preferably 3% by mass or less, and still more preferably 1% by mass or less, of the content of the flame retardants other than the alkali metal salt.

In one example of the resin composition of the present embodiment, the content of a fluoropolymer having fibril forming ability in the resin composition is 0 parts by mass or more and less than 0.01 parts by mass, preferably 0 parts by mass or more and less than 0.001 parts by mass, with respect to 100 parts by mass of the polycarbonate resin. Even when the resin composition of the present embodiment has a configuration in which a fluoropolymer having fibril forming ability is substantially not blended in, excellent flame retardancy can be achieved, and thus, a resin composition or formed article that is excellent in transparency can be obtained.

<Ultraviolet Absorber>

The resin composition of the present embodiment may contain an ultraviolet absorber.

Preferable examples of the ultraviolet absorber include a benzotriazole-based ultraviolet absorber, a benzoxazine-based ultraviolet absorber, a triazine-based ultraviolet absorber, and a malonate ester-based ultraviolet absorber, and the benzotriazole-based ultraviolet absorber is preferable.

Examples of the benzotriazole-based ultraviolet absorber include 2-(2-hydroxy-5-methylphenyl)-2H-benzotriazole, 2-(2-hydroxy-3,5-di-tert-butylphenyl)-2H-benzotriazole, 2-(2-hydroxy-3-tert-butyl-5-methylphenyl)-2H-benzotriazole, 2-(2-hydroxy-5-tert-octylphenyl)-2H-benzotriazole, 2-(3,5-di-tert-octyl-2-hydroxyphenyl)-2H-benzotriazole, 2-(3,5-di-tert-amyl-2-hydroxyphenyl)-2H-benzotriazole, 2-(3-lauryl-5-methyl-2-hydroxyphenyl)-2H-benzotriazole, 2-(3,5-di-tert-butyl-2-hydroxyphenyl)-5-chloro-2H-benzotriazole, 2-(3-tert-butyl-5-methyl-2-hydroxyphenyl)-5-chloro-2H-benzotriazole, 2-(3,5-bis(1-methyl-1-phenylethyl)-2-hydroxyphenyl)-2H-benzotriazole, bis(3-(2H-benzotriazol-2-yl)-2-hydroxy-5-methylphenyl)methane, bis(3-(2H-benzotriazol-2-yl)-2-hydroxy-5-(1,1,3,3-tetramethylbutyl)phenyl) methane, bis(3-(2H-benzotriazol-2-yl)-2-hydroxy-5-cumylphenyl)methane, bis(3-(2H-benzotriazol-2-yl)-2-hydroxy-5-octylphenyl)methane, 1,1-bis(3-(2H-benzotriazol-2-yl)-2-hydroxy-5-methylphenyl)octane, 1,1-bis(3-(2H-5-chlorobenzotriazol-2-yl)-2-hydroxy-5-methylphenyl)octane, 1,2-ethanediyl bis(3-(2H-benzotriazol-2-yl)-2-hydroxybenzoate), 1,12-dodecanediyl bis(3-(2H-benzotriazol-2-yl)-4-hydroxybenzoate), 1,3-cyclohexanediyl bis(3-(5-chloro-2H-benzotriazol-2-yl)-2-hydroxybenzoate), 1,4-butanediyl bis(3-(2H-benzotriazol-2-yl)-4-hydroxy-5-methylphenylethanoate), 3,6-dioxa-1,8-octanediyl bis(3-(5-methoxy-2H-benzotriazol-2-yl)-4-hydroxyphenylethanoate), 1,6-hexanediyl bis(3-(3-(2H-benzotriazol-2-yl)-4-hydroxy-5-tert-butylphenyl)propionate), p-xylenediyl bis(3-(3-(2H-benzotriazol-2-yl)-4-hydroxyphenyl)propionate), bis(3-(2H-benzotriazol-2-yl)-4-hydroxytoluyl) malonate, bis(2-(3-(2H-benzotriazol-2-yl)-4-hydroxy-5-octylphenyl)ethyl) terephthalate, bis(3-(2H-benzotriazol-2-yl)-4-hydroxy-5-propyltoluyl) octadioate, 2-(2H-benzotriazol-2-yl)-6-phthalimidomethyl-4-methylphenol, 2-(2H-benzotriazol-2-yl)-6-phthalimidoethyl-4-methylphenol, 2-(2H-benzotriazol-2-yl)-6-phthalimidooctyl-4-methylphenol, 2-(2H-benzotriazol-2-yl)-6-phthalimidomethyl-4-tert-butylphenol, 2-(2H-benzotriazol-2-yl)-6-phthalimidomethyl-4-cumylphenol, and 2-(2H-benzotriazol-2-yl)-4,6-bis(phthalimidomethyl)phenol. Among these, 2-(2-hydroxy-5-tert-octylphenyl)-2H-benzotriazole (2-(2-hydroxy-5-(1,1,3,3-tetramethylbutyl)phenyl)benzotriazole) is preferable.

For the ultraviolet absorber, the description in paragraphs 0059 to 0062 of Japanese Patent Laid-Open No. 2016-216534 and the description in paragraphs 0069 to 0082 of Japanese Patent Laid-Open No. 2018-178019 can be referred to, the contents of which are incorporated herein.

In the resin composition of the present embodiment, when containing an ultraviolet absorber, the content of the ultraviolet absorber is preferably 0.01 parts by mass or more, and it is also preferably 1 part by mass or less, more preferably 0.03 to 0.7 parts by mass, and still more preferably 0.05 to 0.5 parts by mass with respect to 100 parts by mass of the polycarbonate resins (the total of the virgin polycarbonate resin and the recycled polycarbonate resin).

The resin composition of the present embodiment may contain only one type of ultraviolet absorber, or may contain two or more types thereof. When two or more types are contained, it is preferable that the total amount is in the range described above.

<Stabilizer>

The resin composition of the present embodiment may contain a stabilizer.

Examples of the stabilizer include a thermal stabilizer and an antioxidant.

As the thermal stabilizer, a phosphorus-based stabilizer is preferably used.

As the phosphorus-based stabilizer, any of the known ones can be used. Specific examples thereof include: oxoacids of phosphorus such as phosphoric acid, phosphonic acid, phosphorous acid, phosphinic acid, and polyphosphoric acid; acid pyrophosphate metal salts such as sodium acid pyrophosphate, potassium acid pyrophosphate, and calcium acid pyrophosphate; phosphate salts of Group 1 or Group 2B metals such as potassium phosphate, sodium phosphate, cesium phosphate, and zinc phosphate; and organic phosphate compounds, organic phosphite compounds, and organic phosphonite compounds, but organic phosphite compounds are particularly preferable.

As the antioxidant, a hindered phenol-based stabilizer is preferably used.

Specific examples of the hindered phenol-based stabilizer include pentaerythritol tetrakis[3-(3,5-di-tert-butyl-4-hydroxyphenyl)propionate], octadecyl 3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl bis[3-(3,5-di-tert-butyl-4-hydroxyphenyl)propionamide], 2,4-dimethyl-6-(1-methylpentadecyl)phenol, diethyl [[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

Specific examples of such a hindered phenol-based stabilizer include "Irganox (registered trademark; hereinafter the same applies) 1010" and "Irganox 1076" manufactured by BASF SE, and "Adekastab AO-50" and "Adekastab AO-60" manufactured by Adeka Corporation.

The content of the stabilizer in the resin composition of the present embodiment is normally 0.001 parts by mass or more, preferably 0.005 parts by mass or more, and more preferably 0.01 parts by mass or more, and it is also normally 1 part by mass or less, preferably 0.5 parts by mass or less, and more preferably 0.3 parts by mass or less with respect to 100 parts by mass of the polycarbonate resins (the total of the virgin polycarbonate resin and the recycled polycarbonate resin). By setting the content of the stabilizer to the range described above, the effect of adding the stabilizer is more effectively demonstrated.

The resin composition of the present embodiment may contain only one type of stabilizer, or may contain two or more types thereof. When two or more types are contained, it is preferable that the total amount is in the range described above.

<Mold Release Agent>

The resin composition of the present embodiment may contain a mold release agent.

Examples of the mold release agent include an aliphatic carboxylic acid, a salt of an aliphatic carboxylic acid, an ester of an aliphatic carboxylic acid with an alcohol, an aliphatic hydrocarbon compound with a number average molecular weight of 200 to 15,000, a polysiloxane-based silicone oil, a ketone wax, and Light Amide, and an aliphatic carboxylic acid, a salt of an aliphatic carboxylic acid, and an ester of an aliphatic carboxylic acid with an alcohol are preferable.

For details of the mold release agent, the description in paragraphs 0055 to 0061 of Japanese Patent Laid-Open No. 2018-095706 can be referred to, the contents of which are incorporated herein.

When the resin composition of the present embodiment contains a mold release agent, its content is preferably 0.05 to 3% by mass, more preferably 0.1 to 0.8% by mass, and still more preferably 0.1 to 0.6% by mass in the resin composition.

The resin composition of the present embodiment may contain only one type of mold release agent, or may contain two or more types thereof. When two or more types are contained, it is preferable that the total amount is in the range described above.

<Other Components>

In addition to the polycarbonate resin and the flame retardant, as well as the additives described above, the resin composition of the present embodiment may contain other components other than those described above, as necessary, as long as the desired various physical properties are not significantly impaired. Examples of the other components include other thermoplastic resins, various resin additives, and resin reinforcing materials (glass fibers and glass fillers).

Examples of the resin additives include an antistatic agent, a coloring agent, an anti-fogging agent, a lubricant, an antiblocking agent, a flow improver, a plasticizer, a dispersing agent, and an antibacterial agent. Note that one type of resin additive may be contained, or two or more types thereof may be contained in any combination and in any ratio. For details of these, the description in paragraphs 0059 to 0080 of Japanese Patent Laid-Open No. 2014-065901 and the description in paragraphs 0069 to 0093 of Japanese Patent Laid-Open No. 2018-165017 can be referred to, the contents of which are incorporated herein.

The resin composition of the present embodiment is adjusted such that the total of the polycarbonate resin and the flame retardant, as well as resin additives to be blended as necessary (for example, an ultraviolet absorber, a stabilizer, and a mold release agent), is 100% by mass.

<Physical Properties of Resin Composition>

The resin composition of the present embodiment is preferably excellent in flame retardancy.

Specifically, when the resin composition of the present embodiment is formed into a thickness of 1.5 mm or a thickness of 1.0 mm, the total combustion time is preferably 30 seconds or shorter, more preferably 29 seconds or shorter, still more preferably 27 seconds or shorter, even more preferably 26 seconds or shorter, and even further preferably 25 seconds or shorter. Also, as for the lower limit of the total combustion time described above, for example, 10 seconds or longer is practical.

Also, the resin composition of the present embodiment is preferably free of dripping when formed into a thickness of 1.5 mm or a thickness of 1.0 mm, while satisfying the total combustion time described above.

The flame retardancy is measured in accordance with the description in Examples, which will be described later.

The resin composition of the present embodiment preferably has a low haze.

Specifically, the resin composition of the present embodiment preferably has a haze of 3% or less, more preferably 1% or less, and still more preferably 0.8% or less, when formed into a flat plate-like test specimen with a thickness of 1 mm. As for the lower limit value of the haze described above, more than 0% is practical, and even 0.01% or more sufficiently satisfies the required performance.

The haze described above is measured in accordance with the description in Examples, which will be described later.

The resin composition of the present embodiment also preferably has a high hardness.

Specifically, the resin composition of the present embodiment preferably has a pencil hardness of HB or more, more preferably F or more, and still more preferably H or more, when formed into a flat plate-like test specimen with a thickness of 2 mm. The upper limit is not specified, but even 4H or less sufficiently satisfies the required performance.

The pencil hardness described above is measured in accordance with the description in Examples, which will be described later.

<Method for Producing Resin Composition>

There is no restriction on the method for producing the resin composition of the present embodiment, and a wide range of known methods for producing polycarbonate resin compositions can be employed. Examples thereof include a method in which the polycarbonate resin, the flame retardant, and other components to be blended as necessary are pre-mixed using, for example, various mixing machines such as a tumbler or a Henschel mixer, and then melt-kneaded using a mixing machine such as a Banbury mixer, a roll, a Brabender, a single screw kneading extruder, a twin screw kneading extruder, or a kneader.

Note that, although the temperature for melt kneading is not particularly restricted, it is normally in the range of 240 to 320°C.

<Formed Article>

One form of the resin composition of the present embodiment is a pellet.

Also, the resin composition described above (for example, pellet) is formed into a formed article by various forming methods. That is, the formed article of the present embodiment is formed from the resin composition or pellet of the present embodiment.

There is no particular restriction on the shape of the formed article, which can be selected as appropriate depending on the application and purpose of the formed article. Examples thereof include film, rod, cylindrical, ring, circular, oval, polygonal, irregular, hollow, frame, box, and panel shapes. Among them, those with a panel shape are preferable, and the thickness is, for example, about 1 mm to 5 mm.

The method for forming the formed article is not particularly restricted, and conventionally known forming methods can be employed. Examples thereof include injection molding, injection compression molding, extrusion molding, profile extrusion, transfer molding, hollow molding, gas-assisted hollow molding, blow molding, extrusion blow molding, IMC (in-mold coating molding) molding, rotational molding, multilayer molding, two-color forming, insert molding, sandwich molding, foam molding, and pressure forming methods. In particular, the resin composition of the present embodiment is suited for formed articles obtained by injection molding, injection compression molding, and extrusion molding methods. However, it goes without saying that the resin composition of the present embodiment is not limited to formed articles obtained by these methods.

The formed article of the present embodiment is widely used in applications where flame retardancy is required. Specifically, it is suitably used for components of electrical and electronic equipment, office automation equipment, mobile information terminal equipment, machine components, vehicle-related components, construction members, various containers, leisure goods and sundries, lighting equipment, battery peripheral components, and the like. Specific examples of the vehicle-related components include components of electric vehicles, components of electric bicycles, components of charging guns, and components of charging stands. Among these, the formed article of the present embodiment is particularly suitable for components for displays, mobile information terminal components, household electrical appliances, in-vehicle-related components, battery peripheral articles, or indoor furnishings.

Examples

Hereinafter, the present invention will be described further specifically with reference to Examples. The materials, amounts used, proportions, treatment contents, treatment procedures, and other details shown in Examples below can be changed as appropriate, as long as such changes do not depart from the subject matter of the present invention. Accordingly, the scope of the present invention is not limited to the specific examples shown below.

If the measuring equipment and other instruments used in Examples are difficult to obtain due to discontinuation

or other reasons, other equipment with equivalent performance can be used for the measurement.

1. Raw Materials

The raw materials listed in Table 1 and Table 2 below were used.

[Table 1]

| Component | Symbol | |
|---|---|---|
| Polycarbonate resin (A) | A1 | Branched aromatic polycarbonate resin produced by melt polymerization method using bisphenol C as starting raw material (virgin polycarbonate resin) viscosity average molecular weight: 20000, pencil hardness: 2H |
| | A2 | Branched aromatic polycarbonate resin produced by melt polymerization method using bisphenol C as starting raw material (virgin polycarbonate resin) viscosity average molecular weight: 26000, pencil hardness: 2H |
| PCR-polycarbonate resin (B) | B1 | PCR-PC with discs as main recovery source<br>trade name: PC75X (Hongy) (recycled bisphenol A type polycarbonate resin)<br>lot: 210623, viscosity average molecular weight: 16000, pencil hardness: 2B |
| | B2 | PCR-PC with headlamp lenses as main recovery source<br>trade name: PC2010ANC (Ausell) (recycled bisphenol A type polycarbonate resin)<br>lot: SY20071902, viscosity average molecular weight: 21000, pencil hardness: 2B |
| Polycarbonate resin (BX) | BX1 | Substantially linear aromatic polycarbonate resin produced by interfacial polymerization method using bisphenol A as starting raw material (virgin polycarbonate resin)<br>trade name: H-4000 (Mitsubishi Engineering-Plastics Corporation)<br>viscosity average molecular weight: 16000, pencil hardness: 2B |
| | BX2 | Substantially linear aromatic polycarbonate resin produced by interfacial polymerization method using bisphenol A as starting raw material (virgin polycarbonate resin)<br>trade name: S-3000 (Mitsubishi Engineering-Plastics Corporation)<br>viscosity average molecular weight: 21000, pencil hardness: 2B |
| Other polycarbonate resin (C) | C1 | Aromatic polycarbonate resin produced by interfacial polymerization method described in Example 1 (PC-1) of International Publication No. WO 2011/132510 (virgin polycarbonate resin)<br>viscosity average molecular weight: 64000, pencil hardness: 2B |
| | C2 | Branched aromatic polycarbonate resin produced by melt polymerization method using bisphenol A as starting raw material (virgin polycarbonate resin) trade name: M7028B (Mitsubishi Engineering-Plastics Corporation)<br>viscosity average molecular weight: 28000, pencil hardness: 2B |

[Table 2]

| Component | Symbol | |
|---|---|---|
| Flame retardant | D1 | Potassium nonafluorobutanesulfonate manufactured by Lanxess AG, trade name: Bayowet C4 |
| | D2 | Potassium diphenylsulfonesulfonate manufactured by Arichem, LLC, trade name: KSS-FR |
| Ultraviolet absorber | E1 | 2-(2-Hydroxy-5-(1,1,3,3-tetramethylbutyl)phenyl)benzotriazole manufactured by Shipro Kasei Kaisha Ltd., trade name: SEESORB 709 |

(continued)

| Component | Symbol | |
|---|---|---|
| Stabilizer | F1 | Tris(2,4-di-tert-butylphenyl) phosphite manufactured by Adeka Corporation, trade name: Adekastab 2112 |
| | F2 | n-Octadecyl 3-(4'-hydroxy-3',5'-di-tert-butylphenyl)propionate manufactured by Adeka Corporation, trade name: Adekastab AO-50 |
| | F3 | Pentaerythritol tetrakis[3-(3,5-di-tert-butyl-4-hydroxyphenyl)propionate] manufactured by BASF SE, trade name: Irganox 1010 |
| Mold release agent | G1 | Pentaerythritol tetrastearate manufactured by Emery Oleochemicals LLC, trade name: VPG861 |
| | G2 | Stearyl stearate manufactured by NOF Corporation, trade name: UNISTER M-9676 |

<Production Example 1: Production of Polycarbonate Resin A1>

26.14 mol (6.75 kg) of bisphenol C (BPC) and 26.79 mol (5.74 kg) of diphenyl carbonate were placed in an aluminum (SUS) reactor (internal volume of 10 liters) equipped with a stirrer and a distillation condenser. After replacing the inside of the reactor with nitrogen gas, the temperature was raised to 220°C over 30 minutes under a nitrogen gas atmosphere.

Then, the reaction solution in the reactor was stirred, and cesium carbonate ($Cs_2CO_3$) was added to the reaction solution in a molten state as the transesterification reaction catalyst in an amount of $1.5 \times 10^{-6}$ mol with respect to 1 mol of BPC. The reaction solution was stirred and fostered at 220°C for 30 minutes under a nitrogen gas atmosphere. Next, the pressure in the reactor was reduced to 100 Torr over 40 minutes at the same temperature, and the reaction was further allowed to continue for 100 minutes to allow phenol to be distilled out.

Next, the temperature in the reactor was raised to 284°C over 60 minutes while reducing the pressure to 3 Torr, and phenol was distilled out in an amount corresponding to almost the entire theoretical amount of distillation. Next, the pressure in the reactor was kept below 1 Torr at the same temperature, and the reaction was further continued for 60 minutes, after which the polycondensation reaction was terminated. At this time, the stirring speed of the stirrer was 38 rpm, the temperature of the reaction solution immediately before the termination of the reaction was 289°C, and the stirring power was 1.00 kW.

Next, the reaction solution still in a molten state was fed into a twin screw extruder, and butyl p-toluenesulfonate in a molar amount four times that of cesium carbonate was supplied from the first supply port of the twin screw extruder and kneaded with the reaction solution. Thereafter, the reaction solution was extruded into strands through the die of the twin screw extruder and cut with a cutter to obtain pellets of a polycarbonate resin A1.

<Production Example 2: Production of Polycarbonate Resin A2>

26.14 mol (6.75 kg) of bisphenol C (BPC) and 26.79 mol (5.74 kg) of diphenyl carbonate were placed in an aluminum (SUS) reactor (internal volume of 10 liters) equipped with a stirrer and a distillation condenser. After replacing the inside of the reactor with nitrogen gas, the temperature was raised to 220°C over 30 minutes under a nitrogen gas atmosphere.

Then, the reaction solution in the reactor was stirred, and cesium carbonate ($Cs_2CO_3$) was added to the reaction solution in a molten state as the transesterification reaction catalyst in an amount of $1.5 \times 10^{-6}$ mol with respect to 1 mol of BPC. The reaction solution was stirred and fostered at 220°C for 30 minutes under a nitrogen gas atmosphere. Next, the pressure in the reactor was reduced to 100 Torr over 40 minutes at the same temperature, and the reaction was further allowed to continue for 100 minutes to allow phenol to be distilled out.

Next, the temperature in the reactor was raised to 284°C over 60 minutes while reducing the pressure to 3 Torr, and phenol was distilled out in an amount corresponding to almost the entire theoretical amount of distillation. Next, the pressure in the reactor was kept below 1 Torr at the same temperature, and the reaction was further continued for 60 minutes, after which the polycondensation reaction was terminated. At this time, the stirring speed of the stirrer was 38 rpm, the temperature of the reaction solution immediately before the termination of the reaction was 289°C, and the stirring power was 0.60 kW.

Next, the reaction solution still in a molten state was fed into a twin screw extruder, and butyl p-toluenesulfonate in a molar amount four times that of cesium carbonate was supplied from the first supply port of the twin screw extruder and kneaded with the reaction solution. Thereafter, the reaction solution was extruded into strands through the die of the twin

screw extruder and cut with a cutter to obtain pellets of a polycarbonate resin A2.

<Measurement of Pencil Hardness of Polycarbonate Resin and Resin Compositions>

The pencil hardness of the polycarbonate resin and the resin composition was determined by forming them into flat plate-like test specimens with a thickness of 2 mm and measuring the pencil hardness in accordance with ISO 15184 using a pencil hardness tester at a load of 750 g.

Specifically, the pellets of the polycarbonate resin or the resin composition were dried at 100°C for 5 hours, and then injection molded using an injection molding machine ("α-2000i-150B" manufactured by Fanuc Corporation) under the following conditions: cylinder set temperature of 260°C, mold temperature of 70°C, screw speed of 100 rpm, and injection speed of 30 mm/sec, producing a flat plate-like test specimen (150 mm × 100 mm × 2 mm thick). For this flat plate-like test specimen, the pencil hardness as measured in accordance with ISO 15184 using a pencil hardness tester (manufactured by Toyo Seiki Seisaku-sho, Ltd.) at a load of 750 g was determined.

2. Examples 1 to 10 and Comparative Examples 1 to 5

<Production of Resin Composition Pellets>

The components described in Table 1 or 2 above were blended in the proportions shown in Table 3 to Table 5 (expressed in parts by mass unless otherwise noted), mixed uniformly with a tumbler mixer, and then one vent was supplied to a twin screw extruder (manufactured by Shibaura Machine Co., Ltd., TEM26SX) from the upstream feeder. Furthermore, a glass filler was supplied from the middle of the barrel (at a position 3/5 of the barrel length L downstream from the upstream (hopper site) of the extruder) and fed into the extruder from the barrel upstream of the extruder at a cylinder set temperature of 260°C, screw speed of 180 rpm, and discharge rate of 25 kg/hr to melt and knead to obtain resin composition pellets.

<Flowability (Q value)>

The pellets obtained by the method described above were dried at 100°C for 4 hours or longer, and then flowability was evaluated by measuring the outflow volume per unit time of the resin composition (Q value, unit: $\times 10^{-2}$ $cm^3/sec$) using an elevated type flow tester under the following conditions: temperature of 280°C and load of 160 $kgf/cm^2$, in accordance with JIS P8115. Note that the orifice used was 1 mm in diameter × 10 mm in length.

<HAZE (Haze)>

As for haze, using the 1 mm-thick part of a 3-step test specimen, the value at 23°C was measured in accordance with JIS K-7105.

Specifically, the resin composition pellets obtained as described above were dried at 100°C for 5 hours, and then injection molded into a 3-step test specimen (60 mm × 30 mm × 1 mm thick + 60 mm × 30 mm x 2 mm thick + 60 mm × 30 mm × 3 mm thick) using an injection molding machine ("J55-60H" manufactured by The Japan Steel Works, Ltd.) under the following conditions: cylinder set temperature of 280°C, mold temperature of 80°C, screw speed of 100 rpm, and injection speed of 100 mm/s.

For the flat plate-like test specimen obtained as described above, HAZE (haze) at 23°C was measured using a haze meter in accordance with JIS K-7105.

The haze meter used was the SH-7000 model haze meter manufactured by Nippon Denshoku Industries Co., Ltd.

The unit of haze is shown in %.

<Flame Retardancy>

<<Production of Test Specimen>>

The resin composition pellets obtained as described above were dried at 100°C for 5 hours, and then injection molded into a strip-shaped test specimen for combustion test (125 mm × 13 mm × 1.5 mm thick) using an injection molding machine ("SE100EV" from Sumitomo Heavy Industries, Ltd.) under the following conditions: cylinder set temperature of 260°C, mold temperature of 80°C, screw speed of 100 rpm, and injection speed of 15 mm/s, and into a strip-shaped test specimen for combustion test (125 mm × 13 mm) under the following conditions: cylinder set temperature of 280°C, mold temperature of 80°C, screw speed of 100 rpm, and injection speed of 15 mm/s. As for the thickness of the test specimen,

the thickness of the test specimen was 1.5 mm for Examples 1 to 10 and Comparative Examples 1 to 4, and the thickness of the test specimen was 1.0 mm for Examples 9 and 10 and Comparative Example 5.

<<Combustion Test>>

For the obtained test specimen for combustion test, a vertical combustion test was carried out on five test specimens in accordance with the method of Subject 94 (UL94) of Underwriters Laboratories, and the combustion time and the number of dripping times were measured.

<<Comprehensive Evaluation>>

Evaluation was made as follows.

1: No dripping, total combustion time of 30 seconds or shorter
2: No dripping, total combustion time of longer than 30 seconds
3: Dripping existed

[Table 3]

| | | Example | | | | | Comparative Example | |
|---|---|---|---|---|---|---|---|---|
| | | 1 | 2 | 3 | 4 | 5 | 1 | 2 |
| PC resin (A) | A1 | | | | | | | |
| | A2 | 80 | 80 | 80 | 80 | 80 | 80 | 80 |
| PC resin (B) | B1 | 20 | 20 | 20 | 20 | | | |
| | B2 | | | | | 20 | | |
| PC resin (BX) | BX1 | | | | | | 20 | |
| | BX2 | | | | | | | 20 |
| PC resin (C) | C1 | | | | | | | |
| | C2 | | | | | | | |
| Flame retardant (D) | D1 | 0.08 | 0.08 | 0.08 | 0.08 | 0.08 | 0.08 | 0.08 |
| | D2 | | | | | | | |
| Ultraviolet absorber (E) | E1 | | 0.3 | | | 0.3 | 0.3 | 0.3 |
| Stabilizer (F) | F1 | 0.03 | 0.03 | 0.03 | 0.03 | 0.03 | 0.03 | 0.03 |
| | F2 | | | 0.1 | | | | |
| | F3 | | | | 0.1 | | | |
| Mold release agent (G) | G1 | 0.1 | 0.1 | 0.1 | 0.1 | 0.1 | 0.1 | 0.1 |
| | G2 | 0.1 | 0.1 | 0.1 | 0.1 | 0.1 | 0.1 | 0.1 |
| Pencil hardness | | 2H | 2H | 2H | 2H | 2H | 2H | 2H |
| Flowability (Q value) | | 30 | 31 | 30 | 30 | 22 | 31 | 23 |
| Haze | | 0.5 | 0.6 | 0.6 | 0.6 | 0.3 | 0.3 | 0.3 |
| Flame retardancy 1.5mmt | Combustion time | 21 | 23 | 24 | 23 | 25 | 47 | 34 |
| | Number of dripping times | 0 | 0 | 0 | 0 | 0 | 2 | 0 |
| | Comprehensive evaluation | 1 | 1 | 1 | 1 | 1 | 3 | 2 |

[Table 4]

| | | Example | Comparative Example | Example | | Comparative Example |
|---|---|---|---|---|---|---|
| | | 6 | 3 | 7 | 8 | 4 |
| PC resin (A) | A1 | | | | | |
| | A2 | 80 | 80 | 20 | 20 | 20 |
| PC resin (B) | B1 | | | | | |
| | B2 | 20 | | 50 | 50 | |
| PC resin (BX) | BX1 | | | 19.5 | | 19.5 |
| | BX2 | | 20 | | | 50 |
| PC resin (C) | C1 | | | 10.5 | | 10.5 |
| | C2 | | | | 30 | |
| Flame retardant (D) | D1 | | | 0.08 | 0.08 | 0.08 |
| | D2 | 0.1 | 0.1 | | | |
| Ultraviolet absorber (E) | E1 | 0.3 | 0.3 | 0.3 | 0.3 | 0.3 |
| Stabilizer (F) | F1 | 0.03 | 0.03 | 0.03 | 0.03 | 0.03 |
| | F2 | | | | | |
| | F3 | | | | | |
| Mold release agent (G) | G1 | 0.1 | 0.1 | 0.1 | 0.1 | 0.1 |
| | G2 | 0.1 | 0.1 | 0.1 | 0.1 | 0.1 |
| Pencil hardness | | 2H | 2H | HB | HB | HB |
| Flowability (Q value) | | 22 | 24 | 14 | 16 | 14 |
| Haze | | 0.3 | 0.3 | 0.3 | 0.3 | 0.3 |
| Flame retardancy 1.5mmt | Combustion time | 22 | 24 | 21 | 29 | 37 |
| | Number of dripping times | 0 | 1 | 0 | 0 | 0 |
| | Comprehensive evaluation | 1 | 3 | 1 | 1 | 2 |

[Table 5]

| | | Example | | Comparative Example |
|---|---|---|---|---|
| | | 9 | 10 | 5 |
| PC resin (A) | A1 | 15 | 15 | 15 |
| | A2 | 20 | 20 | 20 |
| PC resin (B) | B1 | 30 | | |
| | B2 | | 30 | |
| PC resin (BX) | BX1 | 21 | 21 | 51 |
| | BX2 | | | |
| PC resin (C) | C1 | 14 | 14 | 14 |
| | C2 | | | |

(continued)

| | | Example | | Comparative Example |
|---|---|---|---|---|
| | | 9 | 10 | 5 |
| Flame retardant (D) | D1 | 0.08 | 0.08 | 0.08 |
| | D2 | | | |
| Ultraviolet absorber (E) | E1 | 0.3 | 0.3 | 0.3 |
| Stabilizer (F) | F1 | 0.03 | 0.03 | 0.03 |
| | F2 | | | |
| | F3 | | | |
| Mold release agent (G) | G1 | 0.1 | 0.1 | 0.1 |
| | G2 | 0.1 | 0.1 | 0.1 |
| Pencil hardness | | F | F | F |
| Flowability (Q value) | | 30 | 16 | 30 |
| Haze | | 0.8 | 0.7 | 0.6 |
| Flame retardancy 1.0mmt | Combustion time | 28 | 25 | 40 |
| | Number of dripping times | 0 | 0 | 4 |
| | Comprehensive evaluation | 1 | 1 | 3 |

In Examples 1 to 10, when the flame retardant (D) was blended at a content of 26 parts by mass with respect to 100 parts by mass of the polycarbonate resin and the rest was carried out in the same manner, extrusion molding could not be performed in any of Examples either and pellets were not obtained.

As is clear from the above results, the formed articles formed from the resin compositions of the present invention were excellent in flame retardancy. In particular, when a fluoropolymer having fibril forming ability (anti-dripping agent) is blended in polycarbonate resin in order to achieve flame retardancy, transparency becomes inferior, but the resin composition of the present invention can achieve flame retardancy even when no fluoropolymer having fibril forming ability is blended in, and a resin composition that is excellent in transparency can be obtained. Furthermore, by using a polycarbonate resin containing a constituent unit represented by the formula (1), such as a bisphenol C type polycarbonate resin, a resin composition capable of providing formed articles that are excellent in hardness could be obtained.

## Claims

**1.** A resin composition,

wherein the resin composition comprises a polycarbonate resin and a flame retardant,
wherein the polycarbonate resin comprises a polycarbonate resin containing a constituent unit represented by the following formula (1) and a recycled polycarbonate resin,
wherein the recycled polycarbonate resin contains a constituent unit represented by the following formula (2), and
wherein a content of the flame retardant is less than 25 parts by mass with respect to 100 parts by mass of the polycarbonate resin:

Formula (1)

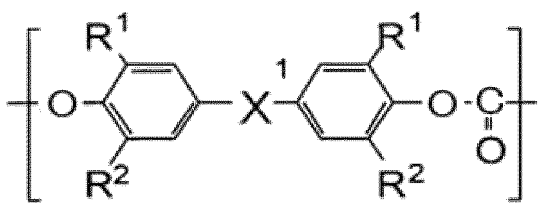

wherein $R^1$ represents a methyl group, $R^2$ represents a hydrogen atom or a methyl group, and $X^1$ represents any of the following formulae:

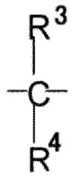 , 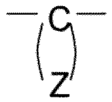

wherein $R^3$ and $R^4$ each independently represent a hydrogen atom or a methyl group, and Z represents a group that is bonded to C to form an alicyclic hydrocarbon having 6 to 12 carbon atoms and optionally having a substituent,

Formula (2)

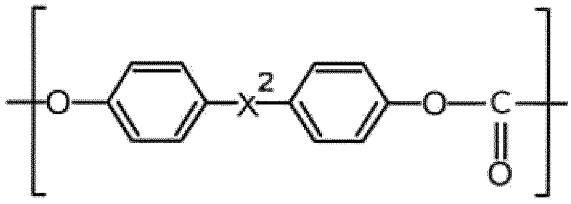

wherein $X^2$ represents any of the following formulae:

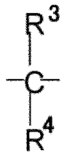 , 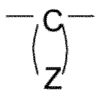

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**2.** The resin composition according to claim 1, wherein the flame retardant comprises a metal salt-based flame retardant.

**3.** The resin composition according to claim 1, wherein the flame retardant comprises an alkali metal salt of sulfonic acid.

**4.** The resin composition according to any one of claims 1 to 3, wherein the polycarbonate resin containing a constituent unit represented by the formula (1) contains the unit represented by the formula (1) in a proportion of 50% by mol or more of entire constituent units.

**5.** The resin composition according to any one of claims 1 to 3, wherein a content of a fluoropolymer having fibril forming ability in the resin composition is 0 parts by mass or more and less than 0.01 parts by mass with respect to 100 parts by mass of the polycarbonate resin.

**6.** The resin composition according to claim 1,

wherein the flame retardant comprises an alkali metal salt of sulfonic acid, and
wherein the polycarbonate resin containing a constituent unit represented by the formula (1) contains the unit represented by the formula (1) in a proportion of 50% by mol or more of entire constituent units:

Formula (2)

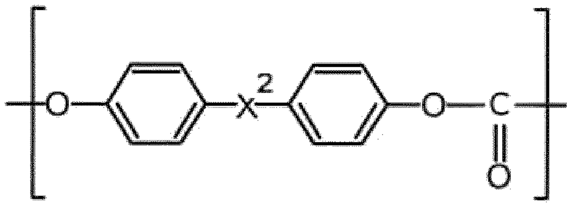

wherein $X^2$ represents any of the following formulae:

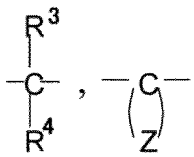

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**7.** The resin composition according to claim 1, 2, or 6,

wherein a content of the polycarbonate resin is 10 to 95% by mass in the resin composition, and
wherein a content of the flame retardant is 0.005 parts by mass or more with respect to 100 parts by mass of the polycarbonate resin.

**8.** The resin composition according to claim 1, 2, or 6, wherein a viscosity average molecular weight of the recycled polycarbonate resin is lower than a viscosity average molecular weight of the polycarbonate resin containing a constituent unit represented by the formula (1).

**9.** The resin composition according to claim 1,

wherein the flame retardant comprises an alkali metal salt of sulfonic acid,
wherein the polycarbonate resin containing a constituent unit represented by the formula (1) contains the unit represented by the formula (1) in a proportion of 50% by mol or more of entire constituent units,
wherein a content of the polycarbonate resin is 10 to 95% by mass in the resin composition,
wherein a content of the flame retardant is 0.005 parts by mass or more with respect to 100 parts by mass of the polycarbonate resin, and
wherein a viscosity average molecular weight of the recycled polycarbonate resin is lower than a viscosity average molecular weight of the polycarbonate resin containing a constituent unit represented by the formula (1):

Formula (2)

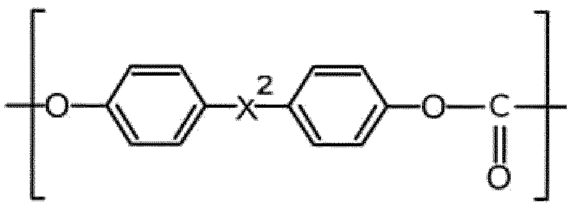

wherein $X^2$ represents any of the following formulae:

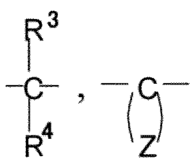

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**10.** A pellet of the resin composition according to any one of claims 1 to 3, 6, and 9.

**11.** A formed article formed from the resin composition according to any one of claims 1 to 3, 6, and 9.

**12.** A formed article formed from the pellet according to claim 10.

## INTERNATIONAL SEARCH REPORT

International application No. **PCT/JP2023/042676**

### A. CLASSIFICATION OF SUBJECT MATTER

***C08L 69/00***(2006.01)i; ***C08K 5/42***(2006.01)i
FI: C08L69/00 ZAB; C08K5/42

According to International Patent Classification (IPC) or to both national classification and IPC

### B. FIELDS SEARCHED

Minimum documentation searched (classification system followed by classification symbols)

C08L69/00; C08K5/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| Y | WO 2019/198303 A1 (SONY CORPORATION) 17 October 2019 (2019-10-17) claims, paragraphs [0006], A-1-3, A-1-4, example 18 | 1-12 |
| Y | WO 2011/125906 A1 (MITSUBISHI CHEMICAL CORPORATION) 13 October 2011 (2011-10-13) claims, paragraph [0004], examples | 1-12 |
| Y | JP 2013-64046 A (MITSUBISHI CHEMICAL CORPORATION) 11 April 2013 (2013-04-11) claims, paragraph [0007], examples | 1-12 |
| Y | JP 2016-117811 A (MITSUBISHI CHEMICAL CORPORATION) 30 June 2016 (2016-06-30) claims, paragraph [0007], examples | 1-12 |
| A | CN 115322550 A (NINGBO TOPCENTRAL NEW MATERIALS CO., LTD.) 11 November 2022 (2022-11-11) | 1-12 |
| A | WO 2021/126796 A1 (SHPP GLOBAL TECHNOLOGIES B.V.) 24 June 2021 (2021-06-24) | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 January 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/042676**

| Patent document cited in search report | Publication date (day/month/year) | Patent family member(s) | Publication date (day/month/year) |
|---|---|---|---|
| WO 2019/198303 A1 | 17 October 2019 | US 2021/0130609 A1<br>claims, paragraphs [0005], [0169]-[0226], A-1-3, A-1-4, example 18<br>CN 111989369 A | |
| WO 2011/125906 A1 | 13 October 2011 | US 2013/0030094 A1<br>claims, paragraph [0007], examples<br>WO 2011/125896 A1<br>WO 2011/125903 A1<br>EP 2557105 A1<br>CN 102822233 A<br>KR 10-2013-0006637 A<br>TW 201202298 A | |
| JP 2013-64046 A | 11 April 2013 | (Family: none) | |
| JP 2016-117811 A | 30 June 2016 | (Family: none) | |
| CN 115322550 A | 11 November 2022 | (Family: none) | |
| WO 2021/126796 A1 | 24 June 2021 | US 2022/0389216 A1<br>EP 4077505 A1<br>CN 114787258 A<br>KR 10-2022-0117248 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010202746 A
- WO 2017099226 A
- JP 2011046769 A
- JP 2015117298 A
- JP 2016 A
- JP 216534 A
- JP 2018178019 A
- JP 2018095706 A
- JP 2014065901 A
- JP 2018165017 A
- WO 2011132510 A